# EUROPÄISCHE PATENTSCHRIFT

(11) **EP 2 718 993 B1**
(45) Veröffentlichungstag und Bekanntmachung des Hinweises auf die Patenterteilung: **20.12.2017**
(21) Anmeldenummer: 12725425.8
(22) Anmeldetag: 04.06.2012
(51) Int. Cl.: H01M 2/02, H01M 2/10, B60L 11/18

(54) **BATTERIE UND KRAFTFAHRZEUG MIT DIESER BATTERIE**
BATTERY AND MOTOR VEHICLE COMPRISING SAID BATTERY
BATTERIE ET VÉHICULE AUTOMOBILE ÉQUIPÉ DE CETTE DERNIÈRE

(30) Priorität: 10.06.2011 DE 102011077349
(43) Veröffentlichungstag der Anmeldung: 16.04.2014
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: FINK, Holger, 70567 Stuttgart (DE)
(74) Vertreter: Bee, Joachim
(86) Internationale Anmeldenummer: PCT/EP2012/060459
(87) Internationale Veröffentlichungsnummer: WO 2012/168166

(56) Entgegenhaltungen:
- DE-A1-102010 029 872
- GB-A- 1 371 879
- US-A1- 2009 239 137

## Beschreibung

Die vorliegende Erfindung betrifft eine Batterie und ein Kraftfahrzeug mit dieser Batterie, wobei die Batterie wenigstens ein mehrere auf einer Bodenplatte angeordnete Batteriezellen umfassendes Batteriemodul aufweist und dabei das Batteriemodul mit seiner Bodenplatte auf einer Grundplatte der Batterie oder einer Grundplatte einer Untereinheit der Batterie angeordnet ist und die Bodenplatte und die Grundplatte mit wenigstens einem Befestigungssystem miteinander ortsfest verbunden sind.

### Stand der Technik

Es ist bekannt, den Grundaufbau einer Batterie so zu gestalten, dass in der Batterie jeweils mehrere Batteriezellen in einem Batteriemodul zusammengefasst sind und mehrere Batteriemodule wiederum in einer Untereinheit angeordnet sind. Die Batterie ist dann aus mehreren dieser Untereinheiten gebildet.

Das Zusammenfügen dieser Bauteile zu den Baugruppen erfolgt dabei meist durch Schraub- oder Nietverbindungen. Daneben zeigt die GB 1 371 879 A eine Anordnung zur Befestigung einer Batteriebox auf einer Grundplatte, wobei die Batteriebox in parallelen Reihen angeordnete Ausformungen aufweist, die geeignet sind in auf der Grundplatte angeordnete Führungen eingeschoben zu werden.

Die US 2009 239 137 A1 offenbart einen Batteriepack, umfassend ein Batteriemodul, welches einen Vorsprung aufweist, einen Träger, welcher die jeweiligen Vorsprünge mehrerer solcher Batteriemodule in einer geraden Linie aufnimmt und Befestigungsmittel zur Befestigung der Vorsprünge am Träger.

Zur Befestigung eines aus mehreren Speicherzellen gebildeten Zellmoduls an einem Kühlkörper zeigt die DE 10 2010 029 872 A1 in einem aus den Speicherzellen gebildeten Zellmodulboden integrierte Befestigungsmittel, die mit entsprechenden Aussparungen des Kühlkörpers in Form und Anzahl korrespondieren.

### Offenbarung der Erfindung

Erfindungsgemäß wird eine Batterie zur Verfügung gestellt, welche wenigstens ein mehrere auf einer Bodenplatte nebeneinander angeordnete Batteriezellen umfassendes Batteriemodul aufweist. Das Batteriemodul ist dabei mit seiner Bodenplatte auf einer Grundplatte der Batterie oder einer Grundplatte einer Untereinheit der Batterie angeordnet. Die Bodenplatte und die Grundplatte sind mit wenigstens einem Befestigungssystem miteinander ortsfest verbunden. Dabei weist das Befestigungssystem wenigstens zwei ineinander einrastende Befestigungspartner auf, wobei der erste Befestigungspartner an dem Batteriemodul und der zweite Befestigungspartner an der Grundplatte angeordnet sind. Der erste Befestigungspartner ist erfindungsgemäß einteilig mit einer neben einer äußeren der Batteriezellen angeordneten Druckplatte des Batteriemoduls ausgeführt. Die Batterie ist dabei bevorzugt eine Li-Ionen Batterie.

Hiermit ist es vorteilhaft ermöglicht, die Batterie schnell, einfach und zuverlässig durch Einrasten des Batteriemoduls in die Grundplatte zusammen zu bauen. Zudem ist vorteilhaft für eine Montage lediglich die Zugänglichkeit aus einer einzigen Richtung erforderlich.

Durch die Kontur der Befestigungspartner wird beim Zusammenfügen des Batteriemoduls und der Grundplatte wenigstens einer der Befestigungspartner zu einer elastischen Verformung gezwungen, aus welcher dieser beim Einrasten zurückfedert und den anderen Befestigungspartner hintergreift. Dadurch wird vorteilhaft kein zusätzliches Werkzeug für die Montage des Batteriemoduls auf der Grundplatte benötigt.

Mit der Anordnung des ersten Befestigungspartners an einer Druckplatte sind die Befestigungspunkte an den äußeren Kanten der Grundfläche des Batteriemoduls angeordnet. Somit kann vorteilhaft ein größtmöglicher Abstand zwischen den Befestigungssystemen und damit eine effizientere Befestigung erreicht werden. Dabei ist bevorzugt jeweils vor der ersten Batteriezelle und hinter der letzten Batteriezelle des Batteriemoduls eine Druckplatte angeordnet.

Weiterhin ist mit dem Befestigungssystem vorteilhaft eine eindeutige Position des Batteriemoduls auf der Grundplatte der Batterie oder auf der Grundplatte einer Untereinheit der Batterie vorgegeben. Damit lässt sich der Montagevorgang der erfindungsgemäßen Batterie leicht in einen automatisierten Prozess einbeziehen.

Der erste Befestigungspartner ist in dieser Anmeldung dadurch definiert, dass er an dem Batteriemodul angeordnet ist, und der zweite Befestigungspartner ist dadurch definiert, dass er an der Grundplatte angeordnet ist.

In einer bevorzugten Ausgestaltung der Erfindung ist vorgesehen, dass durch die zwei Befestigungspartner wenigstens ein Formschluss in einer senkrecht von der Grundplatte weisenden Richtung hergestellt ist.

Hiermit ist vorteilhaft direkt nach einer Montage des Batteriemoduls auf der Grundplatte ein Abheben des Batteriemoduls von der Grundplatte verhindert.

In einer weiteren bevorzugten Ausgestaltung der Erfindung ist vorgesehen, dass der zweite Befestigungspartner durch eine Aussparung in der Grundplatte und eine an die Aussparung angrenzende Fläche der Grundplatte gebildet ist. Der erste Befestigungspartner ist dabei bevorzugt ein in die Aussparung ragender und die an die Aussparung angrenzende Fläche der Grundplatte hintergreifender Federarm.

Eine Aussparung stellt vorteilhaft die einfachste und kostengünstigste Ausgestaltung dar, mit der ein Hinterschnitt erzeugt ist, der zum Einrasten des anderen Befestigungspartners dient. Die Aussparung ist dabei bevorzugt ein Loch, insbesondere ein Sackloch.

Bevorzugt ist die Aussparung dabei unterhalb des Batteriemoduls in der Grundplatte angeordnet.

Hiermit ist vorteilhaft erreicht, dass kein zusätzlicher Platzbedarf innerhalb der Batterie für das Befestigungssystem entsteht.

In einer bevorzugten Ausgestaltung ist vorgesehen, dass der erste Befestigungspartner ein Vorsprung und der zweite Befestigungspartner ein hinter den Vorsprung greifender Federarm ist.

Hiermit ist ein zweiter Befestigungspartner geschaffen, der aus der Grundform der Bodenplatte herausragt. Der Kern der Bodenplatte bleibt mit einer derartigen Ausführung des Befestigungssystems unberührt. So ist es vorteilhaft ermöglicht, Systeme, Leitungen, insbesondere Kühlleitungen oder dergleichen durch die Bodenplatte zu führen.

So ist in einer weiteren bevorzugten Ausgestaltung der Erfindung vorgesehen, dass die Grundplatte wärmeableitend, also eine Kühlplatte ist.

Mit der Ausgestaltung der Grundplatte als Kühlplatte ist das Batteriemodul vorteilhaft leichter zu temperieren.

In einer weiteren bevorzugten Ausgestaltung der Erfindung ist vorgesehen, dass zwischen dem Batteriemodul und der Grundplatte eine, eine Vorspannkraft zwischen dem Batteriemodul und der Grundplatte aufbringende Zwischenschicht angeordnet ist.

Hiermit ist das Befestigungssystem vorteilhaft besser gegen ein Lösen der Befestigungspartner voneinander gesichert.

In einer weiteren bevorzugten Ausgestaltung der Erfindung ist vorgesehen, dass der zweite Befestigungspartner einteilig mit der Grundplatte ausgebildet ist.

Hiermit ist die erfindungsgemäße Batterie vorteilhaft aus weniger Einzelteilen aufgebaut.

Erfindungsgemäß wird weiterhin ein Kraftfahrzeug bereitgestellt mit der erfindungsgemäßen Batterie in den zuvor genannten Ausgestaltungen, wobei die Batterie mit einem Antriebssystem des Kraftfahrzeugs verbunden ist. Die Vorteile der erfindungsgemäßen Batterie als Bauteil kommen so auch dem Kraftfahrzeug als Baugruppe zugute.

Vorteilhafte Weiterbildungen der Erfindung sind in den Unteransprüchen angegeben und in der Beschreibung ausgeführt.

Der Begriff Batterie schließt in dieser Anmeldung auch Batteriesysteme, Akkumulatoren, Akkumulatorbatterien, Akkumulatorsysteme, insbesondere Li-Ionen-Systeme oder Li-Polymer-Ionen-Systeme mit ein.

### Zeichnungen

Die vorliegende Erfindung wird anhand der Zeichnungen und der nachfolgenden Beschreibung näher erläutert. Es zeigen:
Figur 1 den Grundaufbau einer Batterie nach dem Stand der Technik,
Figur 2 ein Batteriemodul nach dem Stand der Technik,
Figur 3 eine Ausführung eines Batteriemoduls einer erfindungsgemäßen Batterie in einer Prinzipskizze,
Figur 4 eine weitere Ausführung des Batteriemoduls der erfindungsgemäßen Batterie in einer Prinzipskizze,
Figur 5 eine Druckplatte eines Batteriemoduls einer erfindungsgemäßen Batterie im Querschnitt,
Figur 6 eine weitere Ausführung des Batteriemoduls der erfindungsgemäßen Batterie in einer Prinzipskizze,
Figur 7 eine weitere Ausführung des Batteriemoduls der erfindungsgemäßen Batterie in einer Prinzipskizze und
Figur 9 eine Druckplatte mit Befestigungselementen.

### Ausführungsformen der Erfindung

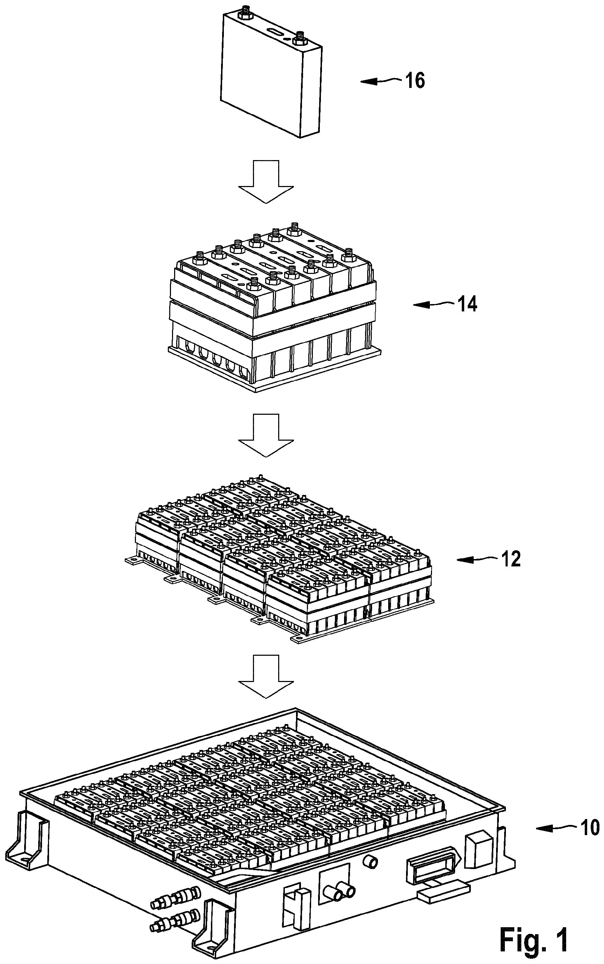

In Figur 1 ist beispielhaft und nicht beschränkend der Grundaufbau einer Batterie 10 nach dem Stand der Technik gezeigt. Die erfindungsgemäße Batterie 10 weist prinzipiell den gleichen Grundaufbau auf. In der Batterie 10 sind jeweils mehrere Batteriezellen 16 in einem Batteriemodul 14 zusammengefasst. Mehrere Batteriemodule 14 sind jeweils in einer Untereinheit 12 angeordnet. Und mehrere Untereinheiten 12 bilden hier die Batterie 10.

Es ist auch möglich, dass die Batterie 10 lediglich eine einzige Untereinheit 12 oder nur ein einziges Batteriemodul 14 umfasst.

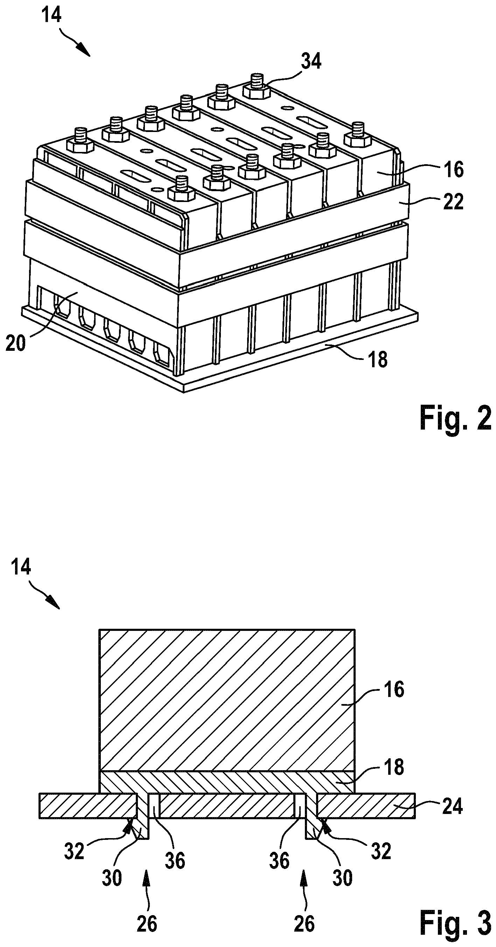

In Figur 2 ist beispielhaft und nicht beschränkend ein Batteriemodul 14 nach dem Stand der Technik gezeigt. Das Batteriemodul 14 der erfindungsgemäßen Batterie 10 beruht auf diesem Aufbau. In der abgebildeten Variante weist das Batteriemodul 14 sechs Batteriezellen 16 auf. Es können auch mehr oder weniger als sechs Batteriezellen 16 pro Batteriemodul 14 sein. Die Anzahl der Batteriezellen 16 richtet sich nach den geforderten Leistungs- und Energieparametern des Batteriemoduls 14 und den Leistungs- und Energieparametern der einzelnen Batteriezellen 16.

Die Batteriezellen 16 weisen jeweils einen im Wesentlichen prismatischen Grundkörper auf, bevorzugt einen im Wesentlichen quaderförmigen Grundkörper, und sind nebeneinander gemeinsam auf einer Bodenplatte 18 angeordnet. Das Batteriemodul 14 weist dadurch ebenfalls eine im Wesentlichen prismatische Grundgestalt auf, bevorzugt eine im Wesentlichen quaderförmige Grundgestalt.

Bevorzugt sind die Batteriezellen 16 dabei mit ihrer Unterseite auf der Bodenplatte 18 montiert, also der Körperseite, die der Körperseite gegenüberliegt, auf welcher sich die Terminals 34 befinden.

Zum Zusammenhalt der einzelnen Batteriezellen 16 sind diese von wenigstens einem Spannband 22 umschlossen. Um dabei die äußeren Batteriezellen 16, also jene, die nur zu einer Seite an eine weitere Batteriezelle 16 grenzen, nicht zu stark zu beanspruchen, sind an den Stirnseiten der Batteriezelle 14 bevorzugt Druckplatten 20 vorgesehen. Die Druckplatten 20 verteilen von den Spannbändern 22 ausgeübte Kräfte großflächiger auf die äußeren Batteriezellen 16.

Optional sind zwischen den einzelnen Batteriezellen 16 Wärmeleitbleche angeordnet, um die einzelnen Batteriezellen 16 besser thermisch miteinander zu vernetzen.

Figur 3 zeigt in einer Prinzipskizze beispielhaft und nicht beschränkend eine Ausführung eines Batteriemoduls 14 mit Befestigungspartnern 30, 32 in einer erfindungsgemäßen Ausgestaltung, mit der Einschränkung, dass mit der vorliegenden Erfindung nur Ausgestaltungen beansprucht werden, bei denen der erste Befestigungspartner 30 an einer Druckplatte 20 angeordnet ist. Die Anordnung des ersten Befestigungspartners an der Bodenplatte 18 ist in das Schutzbegehren der vorliegenden Schrift nicht eingeschlossen. Dargestellt ist ein Querschnitt parallel zu einer Stirnseite des Batteriemoduls 14.

Gezeigt ist das Batteriemodul 14 mit einer Batteriezelle 16 und einer Bodenplatte 18 auf einer Grundplatte 24. Die Grundplatte 24 kann dabei Teil einer Untereinheit 12 der Batterie 10 oder Teil der Batterie 10 selbst sein.

In erfindungsgemäßer Ausgestaltung weisen das Batteriemodul 14 und die Grundplatte 24 Befestigungssysteme 26 auf. Abgebildet sind zwei spiegelbildlich zueinander angeordnete Befestigungssysteme 26.

Erfindungsgemäß ist wenigstens ein Befestigungssystem 26 vorgesehen. In Abhängigkeit von Größe und Masse des Batteriemoduls 14 ist erfindungsgemäß die Anordnung weiterer Befestigungssysteme 26 vorgesehen. Diese können auch versetzt und/oder in einem Winkel zueinander angeordnet sein. Auch ist es erfindungsgemäß denkbar, dass verschiedene Ausführungen von Befestigungssystemen 26 gleichzeitig vorhanden sein können.

Die in Figur 3 gezeigten Befestigungssysteme 26 weisen jeweils zwei Befestigungspartner, einen ersten 30 und einen zweiten 32, auf. Dabei ist der erste Befestigungspartner 30 in dieser Anmeldung dadurch definiert, dass er an dem Batteriemodul 14 angeordnet ist und der zweite Befestigungspartner 32 ist dadurch definiert, dass er an der Grundplatte 24 angeordnet ist.
Die Gestalt der abgebildeten Befestigungspartner 30 und 32 ist lediglich beispielhaft. In Figur 3 sind die ersten Befestigungspartner 30 jeweils durch einen Federarm mit einem Hinterschnitt gebildet. Und die zweiten Befestigungspartner 32 sind hier durch jeweils eine Aussparung 36 und eine an die Aussparung angrenzende Fläche der Grundplatte 24 gebildet.

Der Federarm weist im Wesentlichen eine längliche Gestallt auf, die durch Biegung elastisch verformbar ist. An seinem freien Ende ist der Federarm mit einer schrägen Fläche versehen, durch welche diese elastische Verbiegung beim Abfahren der Kontur des zweiten Befestigungspartners 32 verursacht wird. Hinter der Schrägen weist der Federarm einen Hinterschnitt auf. Dieser stellt beim Einrasten der Befestigungspartner 30 und 32 zusammen mit einer Fläche des zweiten Befestigungspartners 32 einen Formschluss entgegen der Montagerichtung her. Ein Abheben des Batteriemoduls 14 von der Grundplatte 24 ist damit verhindert.

Beim Zusammenfügen des Batteriemoduls 14 mit der Grundplatte 24 werden die Federarme von der Kontur der Grundplatte 24, also den Aussparungen 36 beiseite gedrückt und federn nach dem Passieren der Aussparungen 36 in ihre normale, unverformte Position zurück. Die Grundplatte 24 ist dadurch jeweils vom Hinterschnitt der Federarme hintergriffen. Durch die Wandung der Aussparung 36 ist der jeweilige Federarm zudem wenigstens in einer Querrichtung zur Montagerichtung arretiert. Bevorzugt sind die Befestigungssysteme 26 so ausgerichtet, dass die verschiedenen Befestigungssysteme 26 die ersten Befestigungspartner 30 in unterschiedliche Querrichtungen arretieren.

In Abwandlung zu der in Figur 3 gezeigten Ausführung können die Aussparungen 36 auch am Rand der Grundplatte 24 angeordnet sein. Zudem ist eine Ausführung der Aussparungen 36 als Sackloch möglich, welches eine Tiefe aufweist, die geringer ist als die Dicke der Grundplatte 24. Die Aussparung 36 reicht also nicht bis an die Unterseite der Grundplatte 24. Das Sackloch weist dann selbst im Inneren einen Hinterschnitt auf, in den der erste Befestigungspartner 30 einrasten kann.

Je nach Ausführungsform der Aussparung 36 ist die Höhe des ersten Befestigungspartners 30 so bemessen, dass das Batteriemodul 14 mit einer definierten Kraft auf der Grundplatte 24 aufliegt. Gegebenenfalls ist dazu eine Zwischenschicht 28 zwischen dem Batteriemodul 14 und der Grundplatte 24 angeordnet.

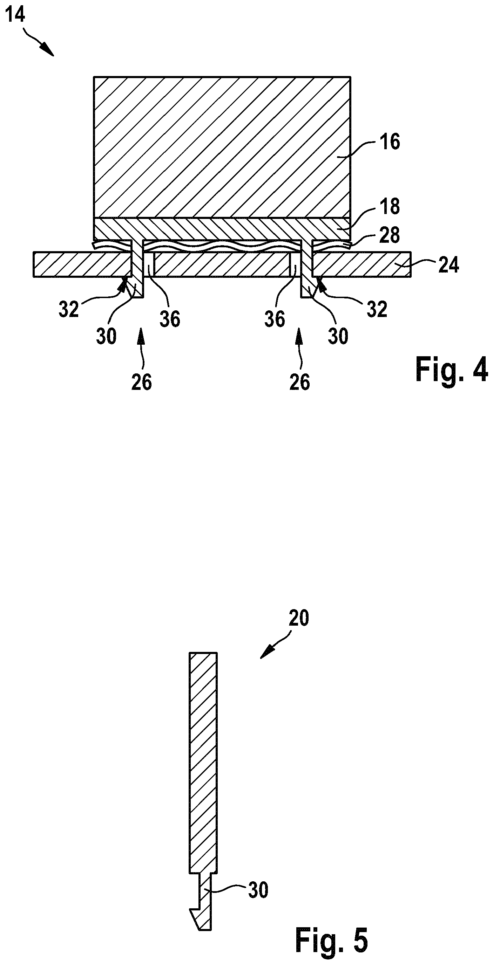

Figur 4 zeigt in einer Prinzipskizze beispielhaft und nicht beschränkend eine weitere Ausführung des Batteriemoduls 14 der erfindungsgemäßen Batterie 10, mit der Einschränkung, dass mit der vorliegenden Schrift nur Ausgestaltungen beansprucht werden, bei denen der erste Befestigungspartner 30 an einer Druckplatte 20 angeordnet ist. Die Anordnung des ersten Befestigungspartners an der Bodenplatte 18 ist nicht in das Schutzbegehren der vorliegenden Schrift eingeschlossen. Dargestellt ist ein Querschnitt parallel zu einer Stirnseite des Batteriemoduls 14.

Ergänzend zu der in der Figur 3 gezeigten Ausgestaltung verfügt die Variante der Figur 4 über eine zwischen der Bodenplatte 18 und der Grundplatte 24 angeordnete Zwischenschicht 28. Die Zwischenschicht 28 ist erfindungsgemäß optional angeordnet.

Die Zwischenschicht 28 übt eine definierte Vorspannkraft auf das Batteriemodul 14 und die Grundplatte 24 in montiertem Zustand aus. Die Zwischenschicht 28 weist dabei elastische Verformungseigenschaften auf. Dies wird durch die wellenförmige Darstellung in Figur 4 symbolisiert. Die tatsächliche Gestalt der Zwischenschicht 28 kann von der dargestellten abweichen.

Figur 5 zeigt beispielhaft und nicht beschränkend einen Querschnitt einer Druckplatte 20 einer erfindungsgemäßen Batterie. Die Druckplatte 20 weist einen integrierten ersten Befestigungspartner 30 auf. Die Zahl und die Anordnung der Befestigungspartner 30 kann dabei variieren, sie muss nicht der Anzahl an zweiten Befestigungspartnern 32 der hier nicht abgebildeten Grundplatte 24 entsprechen, sodass mehrere Möglichkeiten für den Ort einer Fixierung des Batteriemoduls 14 auf der Grundplatte 24 geschaffen sind.

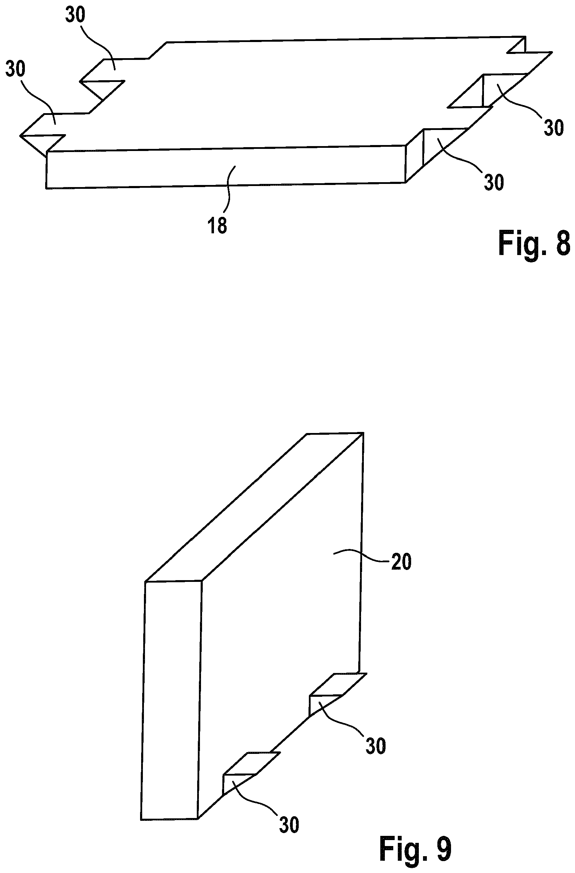

Der erste Befestigungspartner 30 ist in Figur 5 beispielhaft ein Federarm. In Figur 9 sind die zwei ersten Befestigungspartner 30 der Druckplatte 20 beispielhaft als Vorsprung ausgebildet. Erfindungsgemäß sind die Druckplatte 20 und der erste Befestigungspartner 30 bevorzugt einteilig ausgeführt. Entsprechend der Form der ersten Befestigungspartner 30 sind die zweiten Befestigungspartner 32 korrespondierend zu den ersten Befestigungspartnern 30 ausgebildet, sodass ein Einrasten in definierter Position ermöglicht ist.

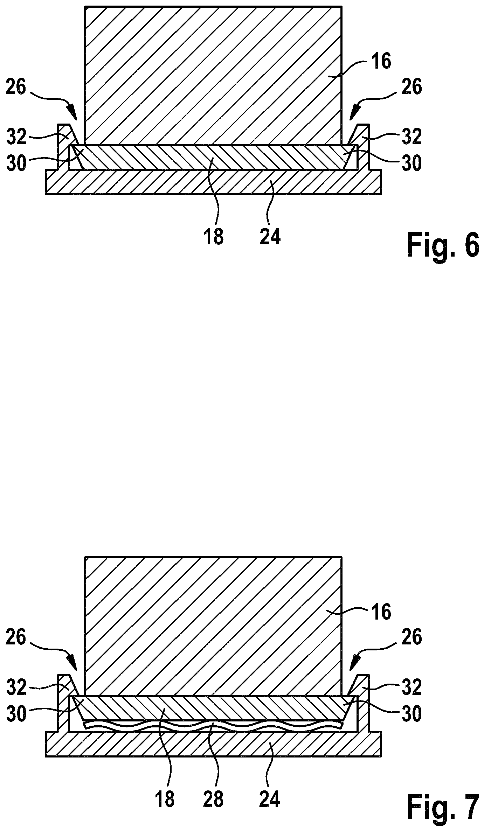

So ist in Figur 6 in einer Prinzipskizze beispielhaft und nicht beschränkend eine Ausführung des Batteriemoduls 14 einer erfindungsgemäßen Batterie 10 gezeigt, mit der Einschränkung, dass mit der vorliegenden Schrift nur Ausgestaltungen beansprucht werden, bei denen der erste Befestigungspartner 30 an einer Druckplatte 20 angeordnet ist. Die Anordnung des ersten Befestigungspartners an der Bodenplatte 18 ist nicht in das Schutzbegehren der vorliegenden Schrift eingeschlossen.

In Figur 6 sind die ersten Befestigungsmittel 30 ebenfalls als Vorsprung ausgeformt. Hier sind sie im Unterschied zur Figur 9 an der Bodenplatte 18 des Batteriemoduls 14 ausgeformt. Dargestellt ist ein Querschnitt parallel zu einer Stirnseite des Batteriemoduls 14.

Gezeigt ist das Batteriemodul 14 mit einer Batteriezelle 16 und einer Bodenplatte 18 auf einer Grundplatte 24. Die Grundplatte 24 kann dabei Teil einer Untereinheit 12 der Batterie 10 oder Teil der Batterie 10 selbst sein.

In erfindungsgemäßer Ausgestaltung weisen das Batteriemodul 14 und die Grundplatte 24 Befestigungssysteme 26 auf. Abgebildet sind zwei spiegelbildlich zueinander angeordnete Befestigungssysteme 26.

Die Gestalt der in Figur 6 abgebildeten Befestigungspartner 30 und 32 ist lediglich beispielhaft. In Figur 6 sind die ersten Befestigungspartner 30 jeweils durch einen Vorsprung der Bodenplatte 18 gebildet. Die Vorsprünge weisen jeweils einen Anstieg und einen Hinterschnitt auf. Die zweiten Befestigungspartner 32 sind hier durch jeweils einen Federarm gebildet.

Beim Zusammenfügen des Batteriemoduls 14 mit der Grundplatte 24 werden die Federarme von der Kontur der Bodenplatte 18, also den Anstiegen, beiseite gedrückt und federn nach dem Passieren der Anstiege in ihre normale, unverformte Position zurück. Die Bodenplatte 18 ist dadurch jeweils vom Hinterschnitt der Federarme hintergriffen. Der Hinterschnitt des Federarms und der Hinterschnitt des Vorsprungs der Bodenplatte 18 bilden damit jeweils eine formschlüssige Verbindung.

Figur 7 zeigt in einer Prinzipskizze beispielhaft und nicht beschränkend eine weitere Ausführung des Batteriemoduls 14 der erfindungsgemäßen Batterie 10, mit der Einschränkung, dass mit der vorliegenden Schrift nur Ausgestaltungen beansprucht werden, bei denen der erste Befestigungspartner 30 an einer Druckplatte 20 angeordnet ist. Die Anordnung des ersten Befestigungspartners an der Bodenplatte 18 ist nicht in das Schutzbegehren der vorliegenden Schrift eingeschlossen. Dargestellt ist ein Querschnitt parallel zu einer Stirnseite des Batteriemoduls 14.

Ergänzend zu der in der Figur 6 gezeigten Ausgestaltung verfügt die Variante der Figur 7 über eine zwischen der Bodenplatte 18 und der Grundplatte 24 angeordnete Zwischenschicht 28, entsprechend der Figur 4.

## Patentansprüche

1. Batterie (10) mit wenigstens einem mehrere auf einer Bodenplatte (18) nebeneinander angeordnete Batteriezellen (16) umfassenden Batteriemodul (14), wobei das Batteriemodul (14) mit seiner Bodenplatte (18) auf einer Grundplatte (24) der Batterie (10) oder einer Grundplatte (24) einer Untereinheit (12) der Batterie (10) angeordnet ist und die Bodenplatte (18) und die Grundplatte (24) mit wenigstens einem Befestigungssystem (26) miteinander ortsfest verbunden sind, wobei das Befestigungssystem (26) wenigstens zwei ineinander einrastende Befestigungspartner (30, 32) aufweist, wobei der erste Befestigungspartner (30) an dem Batteriemodul (14) und der zweite Befestigungspartner (32) an der Grundplatte (24) angeordnet sind, **dadurch gekennzeichnet, dass** der erste Befestigungspartner (30) einteilig mit einer neben einer äußeren der Batteriezellen (16) angeordneten Druckplatte (20) des Batteriemoduls (14) ausgeführt ist.

2. Batterie (10) nach Anspruch 1, wobei durch die zwei Befestigungspartner (30, 32) wenigstens ein Formschluss in einer senkrecht von der Grundplatte (24) weisenden Richtung hergestellt ist.

3. Batterie (10) nach einem der Ansprüche 1 oder 2, wobei der zweite Befestigungspartner (32) durch eine Aussparung (36) in der Grundplatte (24) und eine an die Aussparung (36) angrenzende Fläche der Grundplatte (24) gebildet ist.

4. Batterie (10) nach Anspruch 3, wobei der erste Befestigungspartner (30) ein in die Aussparung (36) ragender und die an die Aussparung (36) angrenzende Fläche der Grundplatte (24) hintergreifender Federarm ist.

5. Batterie (10) nach Anspruch 3 oder 4, wobei die Aussparung (36) in der Grundplatte (24) unterhalb des Batteriemoduls (14) angeordnet ist.

6. Batterie (10) nach einem der Ansprüche 1 bis 2, wobei der erste Befestigungspartner (30) ein Vorsprung und der zweite Befestigungspartner (32) ein hinter den Vorsprung greifender Federarm sind.

7. Batterie (10) nach einem der vorhergehenden Ansprüche, wobei zwischen dem Batteriemodul (14) und der Grundplatte (24) eine Vorspannkraft zwischen dem Batteriemodul (14) und der Grundplatte (24) aufbringende Zwischenschicht (28) angeordnet ist.

8. Batterie (10) nach einem der Ansprüche 2 bis 7, wobei der zweite Befestigungspartner (32) einteilig mit der Grundplatte (24) ausgebildet ist.

9. Kraftfahrzeug mit einer Batterie (10) nach einem der Ansprüche 1 bis 8, wobei die Batterie mit einem Antriebssystem des Kraftfahrzeugs verbunden ist.

## Claims

1. Battery (10) having at least one battery module (14) comprising a plurality of battery cells (16) arranged one next to the other on a floor plate (18), wherein the battery module (14) is arranged with its floor plate (18) on a baseplate (24) of the battery (10) or a baseplate (24) of a subunit (12) of the battery (10), and the floor plate (18) and the baseplate (24) are connected to one another in a positionally fixed fashion with at least one attachment system (26), wherein the attachment system (26) has at least two attachment partners (30, 32) which latch one into the other, wherein the first attachment partner (30) is arranged on the battery module (14), and the second attachment partner (32) is arranged on the baseplate (24), **characterized in that** the first attachment partner (30) is embodied in one piece with a pressure plate (20), arranged next to an outer battery cell of the battery cells (16), of the battery module (14).

2. Battery (10) according to Claim 1, wherein the two attachment partners (30, 32) produce at least one form fit in a direction pointing perpendicularly from the baseplate (24).

3. Battery (10) according to one of Claims 1 or 2, wherein the second attachment partner (32) is formed by a cutout (36) in the baseplate (24) and a surface of the baseplate (24) which adjoins the cutout (36).

4. Battery (10) according to Claim 3, wherein the first attachment partner (30) is a spring arm which projects into the cutout (36) and engages behind the surface of the baseplate (24) which adjoins the cutout (36).

5. Battery (10) according to Claim 3 or 4, wherein the cutout (36) is arranged underneath the battery module (14) in the baseplate (24).

6. Battery (10) according to one of Claims 1 to 2, wherein the first attachment partner (30) is a projection and the second attachment partner (32) is a spring arm which engages behind the projection.

7. Battery (10) according to one of the preceding claims, wherein an intermediate layer (28), which applies a prestressing force between the battery module (14) and the baseplate (24), is arranged between the battery module (14) and the baseplate (24).

8. Battery (10) according to one of Claims 2 to 7, wherein the second attachment partner (32) is embodied in one piece with the baseplate (24).

9. Motor vehicle having a battery (10) according to one of Claims 1 to 8, wherein the battery is connected to a drive system of the motor vehicle.

## Revendications

1. Batterie (10), comprenant au moins un module de batterie (14) comportant plusieurs cellules de batterie (16) disposées les unes à côté des autres sur une plaque de fond (18), le module de batterie (14) étant disposé avec sa plaque de fond (18) sur une plaque de base (24) de la batterie (10) ou une plaque de base (24) d'une sous-unité (12) de la batterie (10) et la plaque de fond (18) ainsi que la plaque de base (24) étant reliées l'une à l'autre en position fixe par au moins un système de fixation (26), le système de fixation (26) possédant au moins deux partenaires de fixation (30, 32) qui s'enclenchent l'un dans l'autre, le premier partenaire de fixation (30) étant disposé sur le module de batterie (14) et le deuxième partenaire de fixation (32) sur la plaque de base (24), **caractérisée en ce que** le premier partenaire de fixation (30) est réalisé d'un seul tenant avec une plaque de compression (20) du module de batterie (14) disposée à côté d'une cellule de batterie extérieure des cellules de batterie (16).

2. Batterie (10) selon la revendication 1, au moins une complémentarité de formes dans une direction orientée perpendiculairement à la plaque de base (24) étant réalisée par les deux partenaires de fixation (30, 32).

3. Batterie (10) selon l'une des revendications 1 ou 2, le deuxième partenaire de fixation (32) étant formé par une cavité (36) dans la plaque de base (24) et une surface de la plaque de base (24) qui est adjacente à la cavité (36).

4. Batterie (10) selon la revendication 3, le premier partenaire de fixation (30) étant un bras de ressort qui fait saillie dans la cavité (36) et qui vient en prise par l'arrière au niveau de la surface de la plaque de base (24) qui est adjacente à la cavité (36).

5. Batterie (10) selon la revendication 3 ou 4, la cavité (36) dans la plaque de base (24) étant disposée au-dessous du module de batterie (14).

6. Batterie (10) selon l'une des revendications 1 ou 2, le premier partenaire de fixation (30) étant une partie en saillie et le deuxième partenaire de fixation (32) un bras de ressort qui vient en prise derrière la partie en saillie.

7. Batterie (10) selon l'une des revendications précédentes, une couche intermédiaire (28) qui applique une force de précontrainte entre le module de batterie (14) et la plaque de base (24) étant disposée entre le module de batterie (14) et la plaque de base (24).

8. Batterie (10) selon l'une des revendications 2 à 7, le deuxième partenaire de fixation (32) étant formé d'un seul tenant avec la plaque de base (24).

9. Véhicule automobile équipé d'une batterie (10) selon l'une des revendications 1 à 8, la batterie étant reliée à un système de propulsion du véhicule automobile.
